# EUROPEAN PATENT APPLICATION

(11) **EP 4 354 188 A1**
(43) Date of publication of application: **17.04.2024**
(21) Application number: 23168688.2
(22) Date of filing: 19.04.2023
(51) Int. Cl.: G02B 5/18, G02B 27/42, G03H 1/04

(54) **METHOD OF MANUFACTURING A DIFFRACTIVE OPTICAL ELEMENT AND DIFFRACTIVE OPTICAL ELEMENT**

(71) Applicant: Carl Zeiss SMT GmbH, 73447 Oberkochen (DE)
(72) Inventor: Quintanilha, Richard, 73479 Ellwangen (DE); Wege, Stephan, 01728 Bannewitz (DE); Fischer, Tanja, 01109 Dresden (DE)
(74) Representative: Patentanwälte Ruff, Wilhelm, Beier, Dauster & Partner mbB

(57) **Abstract**

A method of manufacturing a diffractive optical element effective at an operating wavelength, comprising the following steps: providing a first substrate (SUB1) made of a first substrate material; depositing a layer of a first material on a free surface of the first substrate (SUB1) or one a free surface of an auxiliary layer (AL) formed on the free surface of the first substrate; patterning the layer of the first material to generate a patterned structure comprising a plurality of ridges of the first material and intermediate spaces between the ridges; filling the intermediate spaces with a second material (M2) differing from the first material (M1) to form a patterned layer comprising adjacent portions alternately consisting of the first material (M1) and the second material (M2) to form a multilayer unit (MU) comprising the first substrate (SUB1) and the patterned layer (PL) on the first substrate, the multilayer unit comprising a free surface opposite to the first substrate; providing a second substrate (SUB2) made of a second substrate material (MS2), the second substrate (SUB2) comprising a free surface (FS2) prepared as a contact surface; bonding the multilayer unit (MU) to the free surface (FS2) of the second substrate (SUB2) so that the free surface of the multilayer unit is adjacent to the free surface (FS2) of the second substrate. The diffractive optical element may be designed as a computer generated hologram for use in an interferometric measuring device for interferometrically measuring a shape of a surface of a test object.

## Description

### TECHNICAL FIELD AND PRIOR ART

The invention relates to a method of manufacturing a diffractive optical element (DOE) effective at an operating wavelength and a diffractive optical element that can be manufactured using the method.

A preferred field of application is the production of a diffractive optical element in the form of a computer-generated hologram (CGH) for use in an interferometric measuring device for measuring the surface shape of mirrors for use in optical systems for EUV microlithography, i.e. microlithography that uses extreme ultraviolet (EUV) radiation.

Microlithography is used to produce micro-structured components, such as integrated circuits or LCDs. The microlithography process uses a projection exposure system comprising an illumination system and a projection lens. The image of a mask (reticle) illuminated by the illumination device is projected by means of the projection lens onto a substrate coated with a light-sensitive layer (photoresist) and arranged in the image plane of the projection lens (e.g. a silicon wafer) in order to transfer the mask structure to the light-sensitive coating of the substrate.

In projection lenses designed for the EUV range, i.e. with wavelengths of e.g. about 13 nm or about 7 nm, mirrors are used as optical components for the imaging process due to the lack of suitable light-transmitting refractive materials. Modern projection lenses designed for EUV, such as known from US 2016/0085061 A1, may achieve an image-side numerical aperture (NA) in the range of NA = 0.55 or so. Structures with critical dimensions in the nanometer (nm) range can be manufactured.

As the performance requirements get more challenging with every new generation, larger and larger mirrors are required for producing optical systems for EUV microlithography.

The surface shape of the mirrors is typically measured with high precision interferometers during the manufacturing process. In order to achieve high measurement accuracy with the help of an interferogram or to be able to record even the smallest deviations between the desired shape and the actual shape, it is important to generate the smallest possible number of interference fringes.

Mirrors for EUV systems often have free-form (FF) surfaces, i.e. surface shapes that deviate significantly from rotationally symmetrical, spherical or aspherical surface shapes. This means that an interferometric measurement requires a freely formed input wave in order to achieve an interferogram with a small number of fringes. In principle, the requirements can be met by using CGHs.

In a measuring setup a CGH generates the shape of the wavefront of the inspection wave to conform to the shape of the surface shape of the mirror to be measured. In some setups the CGH may also provide at least one further "calibration functionality" to provide a reference wavefront for calibration or error correction.

Caused by the increasing size of the mirrors to be examined, there is a need to manufacture ever larger CGH's. In the usual electron lithographic production of CGH's a hard mask (e.g. made of chromium) applied to the CHG substrate (typically made of quartz) is structured using a suitable electron beam sensitive resists. As the required size of the CHGs increase (e.g. up to a few tens of centimeters in diameter), the production of CGH 's tends to become extremely long (e.g. write times of several hundred hours) which in turn may cause problems both with regard to inevitable aging effects of the resist and with regard to the growing probability of failure of the electron beam recorder used. The invention disclosed in DE 10 2021 203 850 A1 addresses these problems and provides a method wherein the steps of applying an electron beam-sensitive resist to a hard mask and structuring the hard mask by electron beam lithography are carried out repeatedly for different sections of a hard mask.

The scientific paper titled "Fabrication of large-sized stitching computer generated hologram (CGH)" by Y. Bai et al in: 2021 International Conference of Optical Imaging and Measurement (ICOIM), p. 84 to 87) reports a stitching method of manufacturing large size computer generated holograms for applications in astronomical telescopes.

### SUMMARY OF THE INVENTION

In view of the above background, it is an object of the present invention to provide a method of manufacturing of a diffractive optical element which may be large in size and can be produced with high accuracy, and a diffractive optical element which can be or is produced using this method.

To solve this problem, the invention provides a method comprising the features of claim 1 and a diffractive optical element comprising the features of claim 10. Preferred developments are specified in the dependent claims. The wording of all claims is incorporated into the description by reference.

According to one aspect the invention provides a method of manufacturing a diffractive optical element (DOE) which is effective at an operating wavelength. The DOE is "effective" if it causes diffraction of radiation at the operating wavelength. The DOE may be effective in transmission or reflection. In a transmissive DOE radiation is diffracted as it passes through the diffractive structures. In a reflective DOE radiation is diffracted upon reflection at the DOE. The operating wavelength may be in the visible part of the electromagnetic spectrum, or in other spectral regions, such as infrared (IR), ultraviolet (UV), deep ultraviolet (DUV) or extreme ultraviolet (EUV). In other words: when the DOE is used, radiation having wavelength at and around the operation wavelength may interact with diffractive structures of the DOE. The DOE may be a computer generated hologram (CGH), although other ways of designing an DOE shall not be excluded. The DOE may be suitable and adapted for use in an interferometric measuring device for interferometrically measuring a shape of a surface of a test object. According to one formulation, the method comprises several steps.

In one step (step a)), a first substrate is provided, which is made of a first substrate material. Preferred materials or material groups are explained further below. The first substrate can be used as a transfer substrate, as explained in more detail below.

A layer of a first material is deposited on a free surface of the first substrate or on a free surface of an auxiliary layer formed on the free surface of the first substrate. In other words: The first layer may be deposited directly onto the material of the first substrate. Alternatively, an auxiliary layer may be interposed between the first substrate and the first layer. The auxiliary layer may be made of one or more materials different from the first substrate material and from the first material. For example, the first substrate material may be a material which can be oxidized and the auxiliary layer may be formed by an oxide of the first substrate material either alone or in combination with other materials.

In a next step (step c), patterning step), the layer of the first material is patterned to generate a patterned structure comprising a plurality of ridges of the first material and intermediate spaces between the ridges, where the first material has been removed in the patterning process. The patterned structure of the first material will later on contribute to the diffractive function of the diffractive optical element due to the typical dimensions of the structural elements of the patterned structure when compared to the operating wavelength so that diffraction occurs to a desired extent.

There are several ways to realize the patterning step (step c)). Several options are laid out below. The patterning step generates a pattern of ridges made of the first material and intermediate spaces between the ridges, which are basically empty because the first material has been removed.

In step d) (filling step), the intermediate spaces are filled with a second material differing from the first material to form a patterned layer. The patterned layer comprises portions consisting of the first material (the ridges) and portions of the second material, wherein these portions alternate in lateral directions. The filling step (step d)) results in a multilayer unit comprising the first substrate, optionally the auxiliary layer, and the patterned layer formed directly on the first substrate or on the auxiliary layer formed on the first substrate. The formulation "on the first substrate" is intended to cover both alternatives, as the patterned layer is either directly or indirectly disposed on the first substrate. The multilayer unit comprises a free surface opposite to the first substrate.

In some embodiments, the intermediate spaces are filled with the second material in such a way that when the intermediate spaces are filled completely with the second material, the ridges with the first material and the intermediate spaces with the second material form a common free surface having surface portions of the first material and surface portions of the second material. Preferably, the common free surface of the multilayer unit is a plane surface.

The method further comprises a step of providing a second substrate (step e)). The second substrate is made of a second substrate material. The second substrate material may be transmissive to radiation having the operating wavelength of the diffractive optical element. This is mandatory for transmissive DOEs. If the DOE is reflective it may be preferable to use a second substrate material which absorbs the operating wavelength, e.g. to avoid issues with backside reflection. The second substrate comprises a free surface prepared as a contact surface as explained below.

Once the preceding steps are completed, there is a second substrate having a free surface functionable as a contact surface and the multilayer unit which has a free surface opposite to the first substrate.

A next step (step f)) is a bonding step wherein the multilayer unit is bonded to the free surface of the second substrate so that the free surface of the multilayer unit is adjacent to the free surface of the second substrate. The surfaces may be in direct contact with each other at a bonding interface. It is also possible that an intermediate material is interposed to promote adhesion between the multilayer unit and the second substrate.

The bonding may comprise molecular bonding or anodized bonding, for example. Those methods use direct contact between the materials to be bonded and avoid utilizing a third material, such as glue or cement, which adds another material that could play a role in the CGH functionality. However, a separate bonding material, such as cement or glue, can be used. Preferably, the material should be transparent and uniform and as thin as possible to reduce it is optical contribution.

Once the bonding step is completed, the patterned layer of the first material is encapsulated in a multilayer structure in a region between the first substrate and the second substrate.

The method yields a multilayer element functioning as a diffractive optical element wherein the patterned layer provides the diffraction function, and the second substrate provides required rigidity against deformation. The patterned layer may be protected from contamination and other sources of degradation due to being encapsulated between second substrate and the auxiliary layer maintained on the patterned layer.

Advantageously, the patterned layer can be manufactured such that it has a smooth surface (low roughness, no steps between adjacent portions made of first and second material, respectively). The surface structure of the patterned layer may be inherited from the surface structure of the first substrate and/or the second substrate. Providing a smooth surface helps to make sure that the diffractive function is basically determined only by the different materials distributed within the patterned layer, with little or no undesired surface effects leading to unwanted intensity distributions.

In some embodiments the first substrate is removed from the layer stack, following completion of the bonding step. The resulting multilayer structure includes the second substrate, the patterned layer made of adjacent portions of the first material and the second material in direct or indirect contact with the second substrate. Optionally, the optional auxiliary layer may still be present on the patterned layer to form the free surface of the multilayer unit. In this case, the patterned layer is disposed between the auxiliary layer and the second substrate. Removal is preferable when subsequent steps include stitching two or more units together is a multi-unit stitching step, for example as explained below.

If stitching is desired, removal is preferable, because all units should have the same thickness within some nanometers to avoid negative impact on interferometry measurements. If removal is not desired, the second substrate could be polished down to have the same height as neighbouring units to avoid steps between them, which could impair the CGH functionality.

In other embodiments the first substrate can remain on the patterned layer. In that case a considerable thickness in the hundredth of micron range (significantly larger than the working wavelength) is usually desirable to avoid interference that may compromise the interferometry measurements.

In order to have significant diffraction function it is preferred that a refractive index difference Δn = |n1-n2| between the refractive index n1 of the first material and the refractive index n2 of the second material is at least 0.1, preferably at least 0.2 or at least 0.3 or at least 0.4 or higher. In other words, a high optical contrast between the first and second material is preferred in many cases. The larger the optical contrast is, the thinner the pattern can be. The pattern height scales with 1/Δn.

In general, the first material may be a high refractive index material having a refractive index n1 > 2 at the operating wavelength. The refractive index n1 may be greater than 3 or greater than 3,5, for example. Silicon may be used, for example, which has about n ~ 3,8 for wavelengths in the visible spectrum.

On the other hand, the second material may have significantly smaller refractive index, preferably n2 < 2 or n2 < 1.9 or n2 < 1.8.

In some embodiments, the first material is selected from the group consisting of crystalline silicon (cSi), amorphous silicon (aSi), zinc selenide (ZnSe), zinc telluride (ZnTe), gallium phosphate (GaPO₄), gallium nitride (GaN) or another semiconductor material, with the benefit of using well established deposition process.

Amongst these materials, crystalline silicon is presently preferred for several reasons. Firstly, crystalline silicon exhibits interesting optical properties when compared to other materials usually used in the optics field. For example, crystalline silicon offers advantageous performance due to the relatively high refractive index of the material combined with relatively low absorption that is still high enough to damp resonance and low enough so that the transmission of the diffractive optical element is not reduced significantly. On the other hand, while amorphous silicon provides some advantages, the transmission loss would be higher when similar thicknesses were used. Secondly, semiconductor materials, such as crystalline silicon, are frequently used in processes for manufacturing semiconductor devices. Therefore, generating a structured layer from a continuous layer of silicon for example by etching is a well-established process which can be controlled with high precision. Generating a hard mask before etching is not needed and not provided for in preferred embodiments, thereby reducing the complexity of the sequence of steps and making the process more stable. Further, as semiconductor materials, such as crystalline silicon, are electrically conducting materials, this might help avoiding electrical problems occurring during the electron beam lithography process step.

The second material, used to fill the interspaces between remaining ridges of the first material, should be isotropic, homogeneous and mechanically stable. It may be selected from the group comprising or consisting of SiO₂, SiOCH, Al₂O₃, Si₃N₄, MgF₂, CaF₂. Well established processes such as atomic layer deposition (ALD) or similar techniques, such as sputtering CVD, or PECVD, may be used to apply the second material. Document DE 10 2018 221 405 A1 describes details of process steps and materials which may be used to fill interspaces between leftover ridges of a structured material layer.

Further regarding selection of appropriate materials, the first substrate may be a wafer (thin plate of material) made of silicon (as used in semiconductor manufacturing processes) or made of glass material, such as fused silica (as used in opto-electronic and MEMS). Preferably, the first substrate provides a plane clean free surface on which the first material or the material of the auxiliary layer may be deposited by any suitable method.

When manufacturing a transmissive DOE, one requirement dominating the selection of the second substrate material is that the material should have no or only little absorption at the operating wavelength. Fused silica (synthetic quartz glass) is a preferred option due to availability in high quality and large blank sizes, if needed. Other suitable options include standard optical materials such as BK7, SF6 or materials such as diamond, sapphire, yttrium-aluminium granate (YAG), or glass ceramics, such as Zerodur ^{®}.

Some embodiments of the method are particularly designed to allow generating large size diffractive optical elements with high optical quality. Those embodiments include a stitching step (step h)) which comprises stitching multiple multilayer units side by side on a common second substrate to generate, on the second substrate, a segmented patterned layer having lateral dimensions higher than lateral dimensions of a patterned layer of a single multilayer unit. Those embodiments therefore use a combination of bonding and stitching to obtain the final product.

Stitching allows to restrict the size of multilayer units to moderate sizes for which the process is well established and can be finished in reasonable times. Those smaller multilayer units are then stitched together on a common second substrate which then forms the substrate of the larger final product comprising multiple multilayer units side by side in appropriate alignment.

The multilayer units may have diffent shapes allowing tiling without gaps between adjacent multilayer units. The multilayer units shall have a cutting shape that allows to fully cover the other surface. The shape of the small wafer to be stitched on the large one can be square or rectangular with different side length. The shape could also be hexagonal or trigonal.

This process solves a number of problems hitherto considered as constraints in the field of manufacturing large size diffractive optical elements. For example: thick glass substrates are considered mandatory to ensure thermal and mechanical stability of the diffractive optical element. However, manufacturing of even standard diameter substrates having a thickness sufficient to provide stability, such as a thickness of about 20 mm or so, there is no manufacturing availability. All wafer manufacturing facilities are optimized and set for standard wafer thicknesses smaller than 1 mm with the exception for mask manufacturers which use square 6 inch substrates (chrome on glass).

The stitching step, i.e. the transfer of multiple multilayer units onto a larger second substrate, solves problems arising from the need to have large size diffractive optical elements, for example to be used in an interferometric measuring system.

The combination of the steps of flipping the multilayer unit and bonding it to the second substrate with the patterned surface facing the second substrate also solves another problem specifically critical for manufacturing diffractive optical elements. One might consider using the stitching concept in such a way that the multilayer units as prepared before are bonded to a larger, thicker and stable second substrate by bringing the first substrate in contact with the second substrate such that the patterned layer would be arranged on a free side facing away from the second substrate.

However, inventors recognized that this might not solve the size problem in diffractive optical elements because the thickness of wafers usually used as the first substrate is presently only controlled down to some tenth of micrometers. Therefore, bonding the back side of the first substrate (the surface facing away from the patterned layer) to the second substrate might place adjacent patterned layers at unknown and potentially different heights away from the larger second substrate. Different pattern portions at different heights, however, would deteriorate the optical performance significantly. On the other hand, when the multilayer unit is first flipped and then bonded with the patterned layer facing the second substrate, it is possible to bring all the patterned structural layers at the same height (within reproducibility of deposition and manufacturing between the different wafers). As a result, high performance diffractive optical elements with large usable sizes can be manufactured in reasonable times.

The invention also relates to a diffractive optical element effective at an operating wavelength, in particular a computer generated hologram (CGH), comprising a multilayer structure as follows:
a substrate made of a second substrate material, wherein a thickness of the substrate is at least 0.5 mm and a lateral size of the second substrate is at least 50mm
a patterned layer comprising adjacent portions alternately consisting of a first material and a second material bonded to a bonding surface of the second substrate, wherein the patterned layer is in the form a combined segmented patterned layer formed by stitching multiple smaller patterned layers.

The second substrate material may be transmissive to radiation having an operating wavelength of the diffractive optical element, thereby allowing manufacturing of a transmissive DOE. Alternatively, the DOE may be configured to operate in reflection.

The diffractive optical element may be manufactured by the method of the invention.

According to another aspect, the invention relates to using a diffractive optical element according to the claimed invention and/or manufactured according to the claimed method in an interferometric measuring device for measuring the surface shape of an optical surface of an optical element. The DOE is used to generate from an input wave incident on the diffractive optical element an inspection wave (test wave) comprising a wavefront having a wavefront shape that conforms to the shape of the optical surface to be measured. Performance of measurements can be improved even for large size optical elements, such as mirrors for EUV lithography systems.

### BRIEF DESCRIPTION OF THE DRAWINGS

Further advantages and aspects of the invention are apparent from the claims and from the description of embodiments of the invention, which are explained below with reference to the figures.
Fig. 1A to 1H show schematically various steps of an exemplary process of manufacturing a large size CGH;
Fig. 2 shows diagrams on optical properties of several morphisms of silicon;
Fig. 3 shows an embodiment of an interferometer including an embodiment of a CGH manufactured according to the present method;
Fig. 4 shows schematically two examples of stitching geometries.

### DETAILED DESCRIPTION OF EMBODIMENTS

In the following, we describe exemplary embodiments of manufacturing methods to manufacture a large size diffractive optical element designed as a computer generated hologram (CGH) for use in an interferometric measuring device configured to interferometrically measure a shape of a surface of a test object having a large size.

For example, the test object may be a freeform (FF) mirror designed to be incorporated into an projection lens of a projection exposure apparatus working with extreme ultraviolet (EUV) radiation. The diameter may be in the order of 1 m or more. Established interferometric measuring devices for that purpose operate with visible light having an operating wavelength of about λ = 532 nm, for example. The diffractive pattern on the CGH for that purpose is designed so that a freely formed inspections wave, or test wave, impinging on the surface to be measured is generated. It would be desirable to have a CGH having a diameter in the order of about 17" (17 inch), which is a typical size fitting into available devices used during manufacturing and use.

The method will be explained by using a transmissive DOE as a non-limiting example, i.e. a DOE which is configured to operate in transmission rather than in reflection.

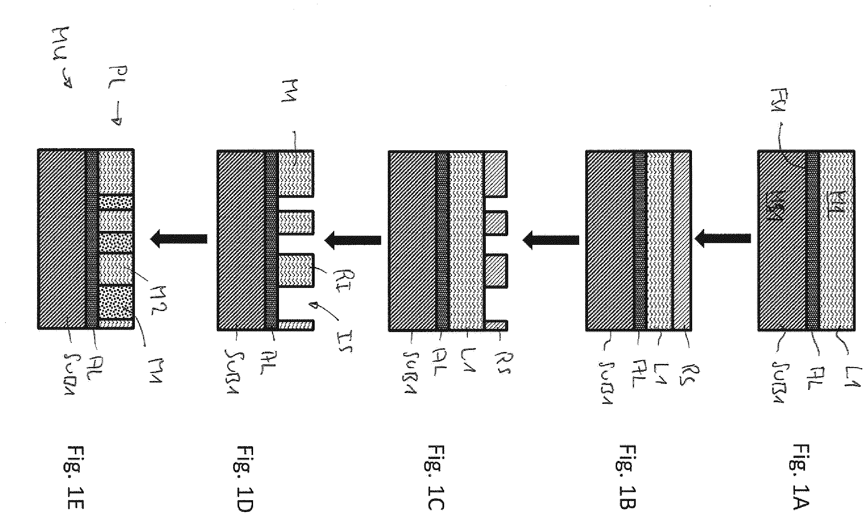

The method includes a series of method steps generating a series of intermediate products, some of which are depicted schematically in Figs. 1A to 1G.

The method partly uses materials and methods known and established from processes known in the field of semiconductor manufacturing under acronyms "SOI" and "SOG", respectively. "SOI" stands for "silicon on insulator", while "SOG" stands for "silicon on glass".

In a first step (a) of the method, a first substrate SUB1 consisting of first substrate material MS1 is provided. The first substrate may preferably consist of silicon (Si) or of a glass material, such as fused silica.

The first substrate material may be selected based on availability and accessibility of devices handling this type of substrates. In some embodiments, the first substrate SUB1 is a thin wafer of the first substrate material having a standard diameter of 150 mm or 200 mm or 300 mm, for example. The first substrate SUB1 has a free surface FS1 which may be planar and finished so as to be able to act as a deposit surface for further layers. The fist substrate shall serve as a carrier thick and stable enough to carry the layers disposed thereon.

The first substrate shall support a layer L1 of a first material M1 which is selected to function as part of a diffractive structure explained in detail below.

There are at least two ways to deposit the layer L1 of the first material. In the example shown in Fig. 1A, the first substrate SUB1 is made of crystalline silicon (cSi). The silicon wafer is exposed to an oxidizing atmosphere so that a thin layer of silicon oxide (SiO₂) is formed on the silicon material of the first substrate SUB1. The SiOz forms an auxiliary layer AL directly in the region of the former free surface FS1. The free surface of the auxiliary layer then acts as the surface on which the first material M1 is deposited.

In another variant, fused silica is used for the first substrate SUB1. In that case, the free surface of the first substrate is chemically stable and an auxiliary layer is not required. Therefore, the first material M1 forming the layer L1 can be deposited directly onto the free surface FS1 of the first substrate SUB1.

Once the depositing step is completed, a multilayer structure has been formed, consisting of the first substrate SUB1, the layer L1 of the first material M1 and, in some embodiments, an auxiliary layer AL between layer L1 and the first substrate SUB1. The optional auxiliary layer may be made of a dielectric insulator or may act an etch stop layer.

The first material M1 used to generate layer L1 is a material selected so that it can be structured with known and established techniques to form parts of the desired diffraction pattern. A part of the patterning sub-process is to deposit a resist layer RS on the layer L1 of the first material M1 (see Fig. 1B). In some embodiments, an optional hard mask is also deposited on layer L1.

Once the resist layer RS is deposited, a patterning step is performed including exposing the resist material to electron beam to partly expose the resist material. Depending on the type of resist, a selective removal of the resist material will remove those portions having been exposed to the electron beam, while the non-exposed areas remain stable (positive photoresist) or, alternatively, the removal capability may be the other way round (negative photoresist).

The patterning step further includes an etching process and a cleaning process in which those portions of the first material of layer L1 not protected by resist material are etched away by an appropriate etching agent, thereby patterning the first material in such a way that a laterally patterned structure is generated which consists of a plurality of ridges RI of the first material M1 separated in lateral direction from the next ridge by intermediate spaces IS between the ridges (see Fig. 1C).

Depending on whether or not an auxiliary layer AL is used, the bottom of the intermediate spaces IS exposes either the surface of the auxiliary layer AL or the free surface FS1 of the first substrate SUB1. The resulting structure in an example utilizing an auxiliary layer AL is shown in partial Fig. 1D

The next step of the process (filling step d) is performed to fill the intermediate spaces IS between the ridges RI with a second material M2, which differs from the first material M1 at least in the refractive index for the operating wavelength at which the CGH will be used later.

Filling the intermediate spaces IS may be performed by sputtering or atomic layer deposition (ALD), for example. In that case, a chemical mechanical polishing (CMP) step may be added to prepare the free surface FSPL of the patterned layer PL to smooth planar plane finish, as shown in partial Fig. 1E. As an alternative, a selective ALD deposition technique may be used to fill the gaps (intermediate spaces) between the ridges with a second material. This is a preferred way to provide the patterned layer given that the etch stop layer was properly selected.

Fig. 1E shows the resulting intermediate product, which may be considered as a multilayer unit MU. The multilayer unit MU comprises a portion of the first substrate SUB1 and the patterned layer PL on the first substrate. Depending on whether or not an auxiliary layer AL was used, the patterned layer PL may be formed directly on the free surface FS1 of the first substrate SUB1 or on the free surface FSAL of the auxiliary layer AL in contact with the free surface of the first substrate.

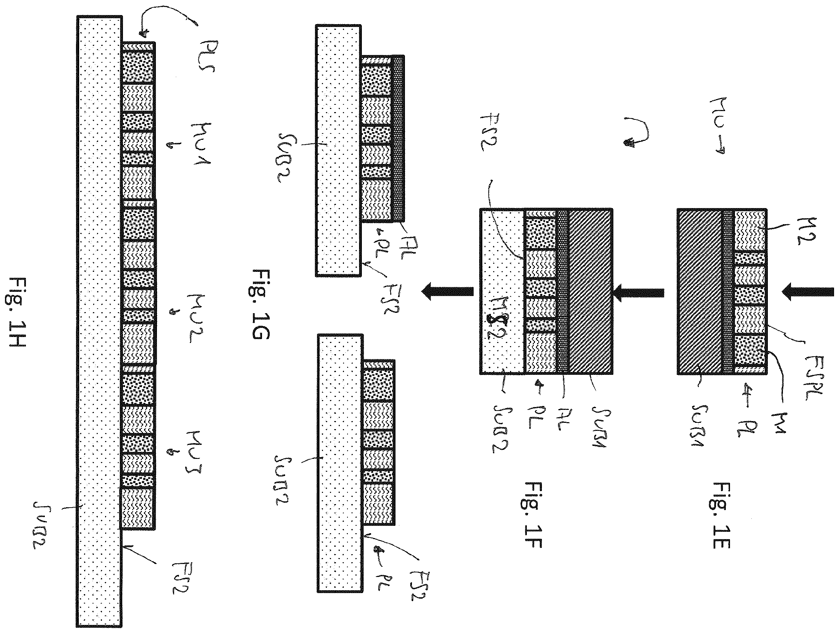

The subsequent steps are shown schematically on the second part of Fig. 1, wherein the upper partial figure on the second page corresponds to Fig. 1E and shows the multilayer unit MU as an intermediate product obtained as described.

It is worth noticing that the multilayer unit MU of this type could be used as a diffractive optical element transmissive at the operating wavelength in those cases where the first substrate material is transparent to the operating wavelength and - if an auxiliary layer is present - the auxiliary layer is also transmissive for the operating wavelength. On the other hand, the multilayer unit will be no transmissive diffractive optical element if the first material M1 used for the first substrate SUB1 were a material exhibiting significant absorption for the operating wavelength. This would be the case, for example, if amorphous silicon were used for forming the first substrate SUB1.

Note, however, that the structure in Fig. 1E is only an intermediate product in the present process, which aims at another technical goal. A further step of the method is depicted in the transition between Fig. 1E and Fig. 1F. In the method, a second substrate SUB2 is provided which is intended to form the final substrate acting as a supporting structure of the overall transmissive diffractive optical element. In order to maintain transparency, the second substrate is made of a second substrate material MS2 which is substantially transparent to radiation having an operating wavelength of the diffractive optical element. The second substrate SUB2 is prepared to exhibit a second free surface FS2 polished or otherwise prepared so as to be able to act as a bonding surface in contact with the free surface FSPL of the patterned layer PL. The second substrate (being the final substrate of the diffractive optical element) is not only selected to be transparent to the operating wavelength, but also selected for its mechanical and thermal stability when exposed to mechanical constraints and environment with changing temperatures. Fused silica or another glass material sufficiently transparent at the operating wavelength can be used to form the second substrate SUB2.

Another important attribute of the second substrate is that it has a size significantly larger than the size of a single multilayer unit MU so that multiple multilayer units may be arranged side by side on the second substrate to form a combined segmented larger patterned layer.

In an important step of the method, the multilayer unit MU is bonded to the free surface FS2 of the second substrate SUB2 in such a way that the free surface of the multilayer unit is adjacent to the free surface FS2 of the second substrate SUB2. Looking at the picture in Fig. 1F, one might say that the multilayer unit MU is first flipped from an upper position of the patterned layer PL (partial Fig. E) to a downside arrangement of the patterned layer (Fig. 1F) and then the patterned layer PL, which is now facing towards the second substrate SUB2, is bonded to the free surface of the second substrate. Alternatively, it is possible to start with the multilayer unit MU as shown in Fig. 1E and to bond the second substrate SUB on top of the patterned layer PL from above so that the second free surface FS2 is bonded to the free surface of the patterned layer.

Once the bonding step is completed, the patterned layer PL is encapsulated between the large transparent second substrate SUB2 and the first substrate SUB, with an auxiliary layer AL optionally being provided between the first substrate SUB1 and the patterned layer PL (see Fig. 1F).

In the exemplary process of Fig. 1, the first substrate SUB1 is then removed from the stack of layers by a suitable method, such as polishing or removal by wet chemistry. Two possible resulting structures are schematically depicted in Fig. 1G. In the variant on the left-hand side, the auxiliary layer AL is still present on top of the patterned layer after removal of the first substrate SUB1 so that the patterned layer PL is encapsulated between the auxiliary layer AL and the second substrate SUB2. In this embodiment, the auxiliary layer AL may protect the patterned layer against environmental influence, such as contamination and/or corrosion.

As shown in the partial figure on the right-hand side of Fig. 1G, the resulting structure of the diffractive optical element includes only the second substrate SUB2 and the patterned layer PL formed thereon. This structure may result from a process where no auxiliary layer is formed in any step of the process. Alternatively, the configuration may be obtained by removing the auxiliary layer AL from the layered structure shown on the left-hand side.

The process steps explained so far may be utilized to form a diffractive optical element having the size of a typical multilayer unit MU formed with an available first substrate.

In the present case it is desired to manufacture a large size diffractive optical element having a lateral extent exceeding the typical size of usable first substrates. In this case the process will include an additional step of stitching multiple multilayer units MU1, MU2, MU3 etc side by side on the common second substrate SUB2, as schematically shown in Fig. 1H. The large second substrate SUB2 transparent to the operating wavelength provides mechanical and thermal stability for the entire diffractive optical element. The diffraction function is provided by a segmented patterned layer PLS consisting of multiple single patterned layers PL resulting from multilayer units stitched together on the second substrate SUB2.

The multilayer units may have diffent shapes allowing tiling without gaps between adjacent multilayer units to fully cover the surface which is to be used. The shape of the small elements to be stitched to form a larger CGH may be square or rectangular with different side length, for example. The shape may also be hexagonal or trigonal. Fig. 4 shows top views of some examples (square and hexagonal). A circular optically used area is indicated.

In preferred embodiments, the material used to form the layer L1 of a first material M1 is a material providing a high optical contrast with respect to the second substrate material, for example with respect to fused silica. A high optical contrast is obtained when there is large difference in refractive index between the first material M1 and the second substrate material at the operating wavelength. For this reason, silicon (Si) or gallium nitride (GaN), for example, may be preferred for forming the layer L1 of the first material, where SiO₂ or SiN are used as the second material. On the other hand, the first material could also be a relatively low refractive index material, such as silicon nitride (SiN), if the second material has lower refractive index, such as SiO₂, or MgF2 or a low index polymer, for example.

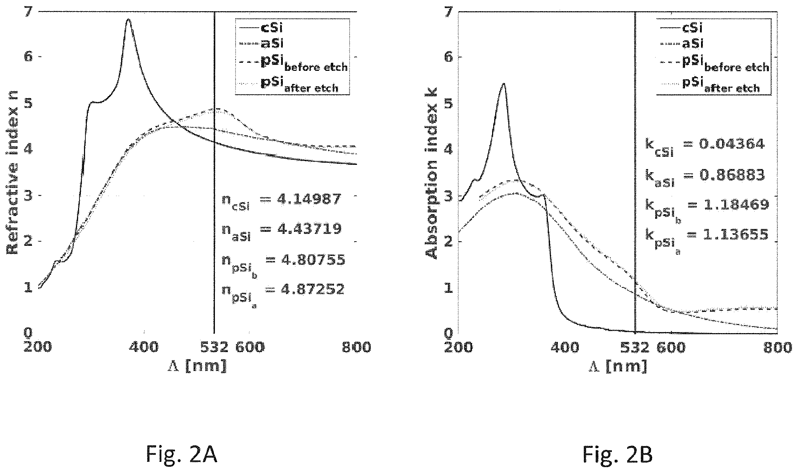

A preference for Si is partly based on the inventors notion that silicon type material offers some interesting optical properties useful in the manufacturing of diffractive optical elements, specifically for DOEs designed to work at operating wavelengths in the visible range, such as about 532 nm. The diagrams in Fig. 2A and 2B show optical properties of different morphisms of silicon. In Fig. 2A, the refractive index over a wavelength is shown. In Fig. 2B, the absorption index k in the respective wavelength range is shown. The comparison shows that crystalline silicon (cSi) offers a very useful combination of high refractive index and relatively low absorption. The refractive index at λ = 532 nm is larger than 4, while the absorption index k is between 0.04 and 0.05, which is high enough to dump resonance and at the same time low enough so that the transmission is not reduced significantly. On the other hand, amorphous silicon will reduce the transmission by about 50%.

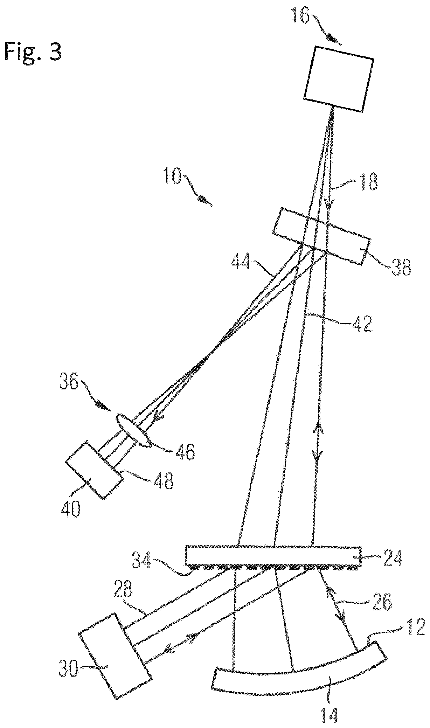

Fig. 3 illustrates an exemplary embodiment of a measurement arrangement 10 for interferometrically determining the shape of an optical surface 12 of a test object 14. The measurement arrangement 10 can be used in particular to determine a deviation of the actual shape of the surface 12 from a desired shape. The test object 14 provided can be, for example, a mirror of a projection lens for EUV microlithography having a non-spherical surface for reflecting EUV radiation at a wavelength of less than 100 nm, in particular a wavelength of approximately 13.5 nm or approximately 6.8 nm. The non-spherical surface of the mirror can have a free-form surface with a deviation from each rotation-symmetric asphere of more than 5 µm and a deviation from each sphere of at least 1 mm.

The measurement arrangement 10 includes a light source 16 for providing a sufficiently coherent measurement radiation as an input wave 18. In the embodiment, the light source provides an operating wavelength of about λ=532 nm.

The measurement arrangement furthermore includes a diffractive optical element 24 transparent to the operating wavelength for producing a test wave 26 and a reference wave 28 from the input wave 18 and a reflective optical element 30 to reflect the reference wave 28. The transmissive diffractive optical element 24 is configured in the form of a complex coded CGH and includes diffractive structures 34, which form two diffractive structural patterns 34 that are arranged superposed on one another in a plane. One of the diffractive structural patterns is configured to produce the test wave 26 with a wavefront that is adapted at least partially to the shape of the optical surface 12. The other diffractive structural pattern produces the reference wave 28 having a plane wavefront. The reflective optical element 30 is configured in the form of a plane mirror for back-reflection of the reference wave 28 with a plane wavefront. In another configuration, the reference wave 28 can have a spherical wavefront and the reflective optical element can be configured as a spherical mirror.

The measurement arrangement 10 furthermore includes a capture device 36 having a beam splitter 38 for guiding the combination of the reflected test wave 26 and the reflected reference wave 28 out of the beam path of the input wave 18, and an interferometer camera 40 for capturing an interferogram produced by superposing the reference wave 28 on the test wave 26.

The diffractive optical element 24, which is configured as a complex coded CGH, produces in transmission by way of diffraction at one of the diffractive structural patterns arranged superposed on one another from the input wave 18 the test wave 26 which is directed at the surface 12 of the test object 14 and has a wavefront that is adapted to a desired shape of the surface 12. During this transformation, the wavefront is adapted such that the test wave is perpendicularly incident at each location of a surface in a desired shape and is reflected back on itself

The test wave 26 propagates in the direction of the test object 14 and next is incident, after it is produced at the diffractive optical element 24, on the optical surface 12 of the test object 14. The test wave 26 is reflected by the surface 12 back to the diffractive optical element 24 and is diffracted again upon passage through the diffractive structures 34. The order of diffraction is here the same as the order of diffraction used when the test wave 26 was produced by diffracting the input wave 18, for example the first order of diffraction. Due to the further diffraction of the test wave at the optical element 24, the reflected test wave 26 is transformed back into an approximately spherical wave, wherein the wavefront thereof has, due to deviations of the surface 12 of the test object 14 from the desired shape, corresponding deviations from a spherical wavefront.

The diffractive optical element 24 furthermore produces in transmission by way of diffraction at the other one of the diffractive structural patterns from the input wave 18 the reference wave 28 which is directed at the reflective optical element 30. The reference wave 28 here has a propagation direction that deviates from the propagation direction of the test wave 26 and a wavefront that is adapted to the surface shape of the reflective optical element 30. In this exemplary embodiment, the reflective optical element 30 is configured as a plane mirror and the reference wave has a plane wavefront due to the transformation at the diffractive optical element 24. In different configurations, a convex or concave spherical mirror can be provided as the reflective optical element and a corresponding adaptation of the wavefront of the reference wave can be performed.

After the reference wave 30 is produced at the diffractive optical element 24, it is incident next on the reflective optical element 30 and is reflected back on itself thereby. In this case no further optical elements are situated in the beam path of the reference wave 28 or in the beam path of the test wave 26. The reflected reference wave 28 again passes through the diffractive optical element 24 and is diffracted again. The order of diffraction is here the same as the order of diffraction used when the reference wave 28 was produced by diffracting the input wave 18, for example the first order of diffraction. Due to the further diffraction of the reflected reference wave 28 at the optical element 24, the reflected reference wave 28 is transformed back into a spherical wave.

The diffractive optical element 24 therefore also serves for superposing the reflected reference wave 28 on the reflected test wave 26. Both waves are incident on the beam splitter 38 as convergent beams 44 and are reflected thereby in the direction of the interferometer camera 40. Both convergent beams 44 travel through an eyepiece 46 and are ultimately incident on a capture plane 48 of the interferometer camera 40. The interferometer camera 40 can be configured for example in the form of a CCD sensor and captures an interferogram produced by the interfering waves. Arranged in the focus of the convergent beams 44 can be a stop (not illustrated in FIG. 3) as a spatial filter for reducing scattered radiation.

An evaluation device (not shown) of the measurement arrangement 10 determines from the captured interferogram the actual shape of the optical surface 12 of the test object 14. To this end, the evaluation device has a suitable data processing unit and uses corresponding calculation methods known to a person skilled in the art. Reference is made to US 2018/0106591 A1 for potential further detail solutions.

A CGH manufactured according to the method of the present application is used as the diffractive optical element 24.

## Claims

**1.** A method of manufacturing a diffractive optical element (DOE) effective at an operating wavelength, in particular a computer generated hologram (CGH) for use in an interferometric measuring device (100) for interferometrically measuring a shape of a surface (112) of a test object (110), comprising the following steps:
a) providing a first substrate (SUB1) made of a first substrate material (MS1);
b) depositing a layer (L1) of a first material (M1) on a free surface (FS) of the first substrate (SUB1) or one a free surface (FSAL) of an auxiliary layer (AL) formed on the free surface of the first substrate;
c) patterning the layer (L1) of the first material to generate a patterned structure comprising a plurality of ridges (ST) of the first material and intermediate spaces (IS) between the ridges;
d) filling the intermediate spaces (IS) with a second material (M2) differing from the first material (M1) to form a patterned layer comprising adjacent portions alternately consisting of the first material (M1) and the second material (M2) to form a multilayer unit (MU) comprising the first substrate (SUB1) and the patterned layer (PL) on the first substrate, the multilayer unit comprising a free surface opposite to the first substrate;
e) providing a second substrate (SUB2) made of a second substrate material (MS2), the second substrate (SUB2) comprising a free surface (FS2) prepared as a contact surface;
f) bonding the multilayer unit (MU) to the free surface (FS2) of the second substrate (SUB2) so that the free surface of the multilayer unit is adjacent to the free surface (FS2) of the second substrate.

**2.** The method according to claim 1, wherein the second substrate material (MS2) is selected to be transmissive to radiation having the operating wavelength of the diffractive optical element.

**3.** The method according to claim 1 or 2, wherein the method includes the step of g) removing the first substrate.

**4.** The method according to one of the preceding claims, wherein a refractive index difference Δn = |n1-n2| between the refractive index n1 of the first material and the refractive index n2 of the second material is at least 0.1, preferably at least 0.2 or at least 0.3 or at least 0.4.

**5.** The method according to one of the preceding claims, wherein the first material (M1) is a high refractive index material having a refractive index n1 > 2 at the operating wavelength.

**6.** The method according to one of the preceding claims, wherein the first material (M1) is selected from the group consisting of:
(i) crystalline silicon (cSi);
(ii) amorphous silicon (aSi);
(iii) zinc selenide (ZnSe ;
(iv) zinc telluride (ZnTe) ;
(v) gallium phosphate (GaPOt);
(vi) gallium nitride (GaN)
(vii) a semiconductor material other than (i) to (vi);

**7.** The method according to one of the preceding claims, further comprising the following step:
h) stitching multiple multilayer units (MU1, MU2) side by side on a common second substrate (SUB2) to generate, on the second substrate (SUB2), a segmented patterned layer (PLS).

**8.** The method according to one of the preceding claims, wherein the second substrate material (MS2) is selected from the group consisting of:
(i) fused silica;
(ii) a standard optical glass transparent to the operating wavelength;
(iii) diamond;
(iv) sapphire;
(v) yttrium-aluminium granate (YAG)
(vi) a glass ceramic.

**9.** The method according to one of the preceding claims, wherein the second substrate (SUB2) has a thickness of more than 10 mm, preferably 15 mm or more.

**10.** A diffractive optical element effective at an operating wavelength, in particular computer generated hologram (CGH), comprising a multilayer structure as follows:
a substrate made of a second substrate material (MS2), wherein a thickness of the substrate is at least 0.5 mm and a lateral size of the second substrate is at least 50 mm ;
a patterned layer comprising adjacent portions alternately consisting of a first material and a second material bonded to a bonding surface of the second substrate, wherein the patterned layer is in the form of a combined segmented patterned layer (PLS) formed by stitching multiple smaller patterned layers (PL).

**11.** The diffractive optical element according to claim 10, wherein the diffractive optical element is manufactured by the method according to one of claims 1 to 9.

**12.** The diffractive optical element according to claim 10 or 11, wherein the operating wavelength is in the visible part of the electromagnetic spectrum.

**13.** The diffractive optical element according to claim 10, 11 or 12, wherein the second substrate material is transmissive to radiation having an operating wavelength of the diffractive optical element.

**13.** Use of a diffractive optical element according to one of claims 10 to 12 in an interferometric measuring device for measuring the surface shape of an optical surface of an optical element to generate from an input wave incident on the diffractive optical element an inspection wave comprising a wavefront having a wavefront shape that conforms to the shape of the optical surface to be measured.
